# EUROPÄISCHE PATENTANMELDUNG

(11) **EP 3 297 095 A1**
(43) Veröffentlichungstag der Anmeldung: **21.03.2018**
(21) Anmeldenummer: 16189125.4
(22) Anmeldetag: 16.09.2016
(51) Int. Cl.: H01R 4/34, H01R 4/30, F16B 37/06, H01R 4/38, H01R 25/16

(54) **KUPFERSTROMSCHIENE**

(71) Anmelder: Siemens Aktiengesellschaft, 80333 München (DE)
(72) Erfinder: Kneißl, Philipp, 90427 Nürnberg (DE)

(57) **Zusammenfassung**

Die Erfindung betrifft eine Kupferstromschiene. Zur Verbesserung der Verbindbarkeit mit einem Kabelschuh (3) wird vorgeschlagen, dass die Kupferstromschiene (1) mindestens ein Stufenloch (2) zur Befestigung eines Kabelschuhs (3) mittels einer Schraubverbindung (4) aufweist, wobei sich das Stufenloch (2) von einer ersten Oberfläche (11) der Kupferstromschiene (1) zu einer zweiten Oberfläche (12) der Kupferstromschiene (1) erstreckt, wobei das Stufenloch (2) mindestens einen ersten Bereich (21), einen zweiten Bereich (22) und einen dritten Bereich (23) aufweist, wobei der erste Bereich (21) des Stufenlochs (2) an die erste Oberfläche (11) grenzt, wobei der Radius des Stufenlochs über die Länge des zweiten Bereichs (22) mit dem zweiten Radiuswert (r₂) konstant ist, wobei der dritte Bereich (23) an die zweite Oberfläche (12) grenzt, wobei der dritte Bereich (23) zumindest an der zweiten Oberfläche (12) einen Radius mit einem dritten Radiuswert (r₃) aufweist, wobei der dritte Radiuswert (r₃) kleiner ist als der zweite Radiuswert (r₂). Weiter betrifft die Erfindung ein Kontaktsystem (30) mit einer solchen Kupferstromschiene (1), sowie einen Stromrichter mit einer solchen Kupferstromschiene (1) oder einem solchen Kontaktsystem (30). Ferner betrifft die Erfindung ein Herstellverfahren für eine solche Kupferstromschiene (1).

## Beschreibung

Die Erfindung betrifft eine Kupferstromschiene. Ferner betrifft die Erfindung ein Kontaktsystem mit einer solchen Kupferstromschiene, einem Kabelschuh und einer Schraubverbindung, wobei die Schraubverbindung eine Setzmutter und eine Schraube umfasst. Weiter betrifft die Erfindung einen Stromrichter mit einer solchen Kupferstromschiene oder einem solchen Kontaktsystem. Ferner betrifft die Erfindung ein Verfahren zur Herstellung einer solchen Kupferstromschiene.

Kupferstromschienen dienen dazu, hohe Ströme verlustarm zu leiten. Der Vorteil des Kupfers liegt dabei in seinem guten Leitwert. Kupferstromschienen kommen vielfach in Stromrichtern zum Einsatz, da eine Kupferstromschiene nur eine geringe Induktivität aufweist und damit schnelle Schaltvorgänge im Stromrichter realisierbar sind. Darüber hinaus ist es in Stromrichtern mit diskreten Bauelementen, wie beispielsweise Halbleiterschaltern, oftmals erforderlich, einen Kabelschuh auf der Kupferstromschiene anzubinden, um eine Kabelverbindung elektrisch zu kontaktieren.

Aus dem Stand der Technik ist der Einsatz von Furchschrauben bekannt. Durch das Einschrauben der Furchschraube in die Kupferstromschiene wird durch Materialverdrängung ein Gewinde in der Kupferstromschiene hergestellt.

Ebenso ist die Verwendung von Einpressgewindebolzen möglich. Diese haben eine nicht zu vernachlässigenden Bauhöhe, die in vielen Anwendungsfällen nachteilig ist. Darüber hinaus lassen die hohen Herstellkosten den Einsatz von Einpressgewindebolzen oftmals unwirtschaftlich erscheinen. Zusätzlich sind Kombimutter immer nur begrenzt mit Kabelschuhen einsetzbar, da die Auflagefläche der Spannscheibe gesondert betrachtet werden muss.

Durchsteck-Verschraubungen als weitere Alternative sind teuer in der Herstellung und die Einbaulage in der Montage ist nicht ausreichend zugänglich.

Darüber hinaus birgt das Auffädeln von Scheiben große Probleme in der Montage und der Qualität, wodurch Zwischenlösungen mit den oben aufgezählten Mitteln, die aus dem Stand der Technik bekannt sind, und zusätzlichen Scheiben nicht möglich sind.

Der Erfindung liegt die Aufgabe zugrunde, eine Kupferstromschiene hinsichtlich ihrer Kontaktierbarkeit mit einem Kabelschuh zu verbessern.

Die Aufgabe wird durch eine Kupferstromschiene gelöst, wobei die Kupferstromschiene mindestens ein Stufenloch zur Befestigung eines Kabelschuhs mittels einer Schraubverbindung aufweist, wobei sich das Stufenloch von einer ersten Oberfläche der Kupferstromschiene zu einer zweiten Oberfläche der Kupferstromschiene erstreckt, wobei das Stufenloch mindestens einen ersten Bereich, einen zweiten Bereich und einen dritten Bereich aufweist, wobei der erste Bereich des Stufenlochs an die erste Oberfläche grenzt, wobei der Radius des Stufenlochs über die Länge des zweiten Bereichs mit dem zweiten Radiuswert konstant ist, wobei der dritte Bereich an die zweite Oberfläche grenzt, wobei der dritte Bereich zumindest an der zweiten Oberfläche einen Radius mit einem dritten Radiuswert aufweist, wobei der dritte Radiuswert kleiner ist als der zweite Radiuswert. Weiter wird die Aufgabe durch ein Kontaktsystem mit einer solchen Kupferstromschiene, einem Kabelschuh und einer Schraubverbindung gelöst, wobei die Schraubverbindung eine Setzmutter und eine Schraube umfasst, wobei mittels der Schraube, die von der Seite der zweiten Oberfläche in das Stufenloch eingeführt ist, und mittels der Setzmutter, die von der Seite der ersten Oberfläche in das Stufenloch eingesetzt ist, der Kabelschuh durch Verschrauben der Schraubverbindung an der zweiten Oberfläche befestigt ist. Ferner wird die Aufgabe durch einen Stromrichter mit einer solchen Kupferstromschiene oder einem solchen Kontaktsystem gelöst, wobei mittels der Kupferstromschiene ein elektrischer Anschluss des Stromrichters und ein Halbleiterschalter des Stromrichters elektrisch miteinander verbunden sind. Weiter wird die Aufgabe durch ein Verfahren zur Herstellung einer solchen Kupferstromschiene gelöst, wobei das Stufenloch der Kupferstromschiene mittels einer Stanzmaschine in die Kupferstromschiene eingebracht wird.

Weitere vorteilhafte Ausgestaltungen der Erfindung sind in den abhängigen Ansprüchen angegeben.

Der Erfindung liegt die Erkenntnis zugrunde, dass sich durch das Einbringen eines Stufenlochs in die Kupferstromschiene einfach und zuverlässig eine elektrische Verbindung zwischen Kabelschuh und Kupferstromschiene mittels einer Verschraubung herstellen lässt. Das Stufenloch hat dabei drei Bereiche, an denen das Loch zumindest abschnittsweise einen unterschiedlichen Radius aufweist. Der zweite Bereich weist einen konstanten Radius auf: Dies dient der Führung der Einpressmutter in die Kupferstromschiene. Darüber hinaus wird die Einpressmutter in der Kupferstromschiene zentriert. Der erste Bereich hat vor dem Einpressen der Setzmutter einen Radius der kleiner oder gleich ist wie der zweite Radiuswert. Der dritte Bereich, der an der zweiten Oberfläche der Kupferstromschiene endet, an der auch der Kabelschuh befestigt wird und an der der Kabelschuh die Kupferstromschiene elektrisch kontaktiert, hat einen geringeren Radius als der erste und der zweite Bereich. Dieser kleine Radius, insbesondere an der zweiten Oberfläche der Kupferstromschiene, ermöglicht eine gute und sichere Kontaktierung mit einer entsprechenden Kraft ohne aufgrund eines zu großen Lochs an der Oberfläche der Kupferstromschiene den Kabelschuh unzulässig zu verbiegen oder übermäßig zu deformieren. Um den Einsatz von Setzmuttern zu ermöglichen, ist es besonders vorteilhaft, wenn an der Auflagefläche für den Kabelschuh ein kleinerer Durchmesser vorliegt als auf der Einpressseite der Setzmutter. Dies wird durch das Stufenloch erreicht, welches beispielsweise auf herkömmlichen Stanzmaschinen hergestellt werden kann.

Im Gegensatz zu einer Lösung mit einem direkt in das Kupfer geschnittenen Gewinde kann mit der erfindungsgemäßen Lösung eine Mindestklemmlänge und eine Mindesteischraubtiefe eingehalten werden. Diese können über eine entsprechende Gewindelänge der Einpressmutter sichergestellt werden. Das Einhalten der Mindestklemmlänge und der Mindesteischraubtiefe ist bei einem geschnittenen Gewinde in Verbindung mit einer eingesetzten Kombischraube, auch bezeichnet als Schraube mit unverlierbaren Unterlegteilen, nicht in jedem Fall möglich, sondern von der Dicke der Kupferschiene abhängig.

Im Vergleich zu einer Durchzugsgeometrie mit angeprägter Senkung ist die erfindungsgemäße Kupferstromschiene deutlich weniger komplex, da sie in der Herstellung mit deutlich geringeren Toleranzen behaftet ist. Ebenso entfällt die Verwendung unterschiedlicher Werkzeuge aufgrund von unterschiedlichen Materialstärken. Somit kann eine sichere Fertigung auch an verschiedenen Standorten oder von unterschiedlichen Zulieferern gewährleistet werden.

Das Kontaktsystem mit einer solchen Kupferstromschiene mit Stufenloch, einem Kabelschuh und einer Schraubverbindung erfüllt darüber hinaus typische Anforderungen an eine solche Schraubverbindung. Eine Deformation und Material-Fließen in den Kabelschuhen kann bei dieser Lösung zuverlässig ausgeschlossen werden.

Die Kupferstromschiene mit Stufenloch hat zahlreiche Vorteile. Bisher mussten auf Setzmuttern entweder Scheiben unter den Kabelschuh gelegt werden oder der Einsatz war gar nicht erlaubt, wenn nicht ein zweites Bauteil mit verschraubt wurde. Die Kupferstromschiene mit Stufenloch ermöglicht den direkten und wirtschaftlichen Einsatz der Setzmuttern direkt mit Kombischrauben. Die Verbindung ist dabei günstiger und sicherer als die aus dem Stand der Technik bekannte Durchzugsgeometrie, da sie weniger Fertigungsschritte auf der Stanzmaschine umfasst. Es ist kein Durchzug vorhanden, der den Richtprozess erschwert. Durch das spätere Setzen der Mutter ist das Richten einfacher. Dies wird darüber hinaus erleichtert, da keine Masken nötig sind. Zudem ist die Ausfallrate geringer als mit Furchschrauben. Die Geometrie ist robuster gegen umliegende Features, wie beispielsweise Biegungen im Blech. Schwankungen in der Materialhärte werden zudem problemlos toleriert und die Toleranzen der Löcher sind deutlich weiter. Weiter können die Schrauben mit einem Standarddrehmoment für weiche Werkstoffe angezogen werden und müssen nicht, wie beispielsweise bei den Furchschrauben, mit einzeln ermittelten Sonderdrehmomenten behandelt werden. Auch Verschraubungen mit einem höheren Drehmoment sind möglich. Dies ergibt sich durch die Einpressmutter gegenüber einem Gewinde, das in das Kupfer eingebracht wurde. Weiter ist das Stufenloch direkt auch bei anderen weichen Materialien, wie beispielsweise Aluminium, anwendbar. Es müssen keine neuen Drehmomente, Durchmesser oder Mindesteinschraubtiefen im Versuch oder im Labor ermittelt werden. Des Weiteren müssen keine Scheiben einzeln aufgefädelt werden. Dies vermeidet Fehler in der Montage, so dass diese effektiver wird. Darüber hinaus ist das Stufenloch, im Gegensatz zu den Durchzügen, mit den geeigneten Werkzeugen von beiden Stanzrichtungen herstellbar. Ferner ist das Gewinde der Setzmuttern fester und hält auch im Reparaturfall mehr Schraubvorgänge aus, als ein Gewinde in Kupfer.

Einen besonderen Vorteil bietet der Einsatz der Kupferstromschiene mit einem Stufenloch in Stromrichtern. Durch die schnellen Schalthandlungen des Stromrichters in einem Bereich von mehreren Kilohertz (kHz) oder darüber ist der Einsatz von Stromschienen vorteilhaft, da diese niederinduktiv sind und damit störende Spannungen aufgrund von Schalthandlungen reduzieren oder vermeiden. Durch die räumliche Enge ist es dabei vielfach notwendig, einen Übergang von Kupferstromschienen auf Kabel zu schaffen. Dieser kann mit der Kupferstromschiene und dem Stufenloch sowie einem Kabelschuh auf einfache Weise realisiert werden.

Bei einer vorteilhaften Ausgestaltung der Erfindung ist in die erste Oberfläche im Bereich des Stufenlochs eine Setzmutter derart mittig in das Stufenloch eingepresst, dass der Radius im ersten Bereich einen ersten Radiuswert annimmt und sich zwischen dem ersten Bereich und dem zweiten Bereich eine Stufe im Stufenloch bildet, in dem sich der Radius an einer Grenze von dem ersten Bereich zu dem zweiten Bereich von einem ersten Radiuswert zu einem zweiten Radiuswert derart ändert, dass sich an der Grenze zwischen erstem Bereich und zweitem Bereich eine Auflagefläche parallel zur ersten Oberfläche bildet, und der zweite Radiuswert kleiner ist als der erste Radiuswert, wobei mittels einer Schraube, die von der Seite der zweiten Oberfläche in das Stufenloch einsetzbar ist mittels der Setzmutter, der Kabelschuh an der zweiten Oberfläche befestigbar ist. Durch das Einpressen der Setzmutter verringert sich aufgrund von verdrängtem Material der Kupferstromschiene der Radius und nimmt nach dem Einpressen einen ersten Radiuswert an, der größer ist als der zweite Radiuswert. Am entstandenen Übergang zwischen dem ersten und dem zweiten Bereich weist der Wert des Radius somit einen Sprung auf, so dass hierdurch eine Auflagefläche gebildet wird, an der die Zahnung des Kragens der Einpressmutter eingreifen kann. Durch das Einpressen der Mutter kann eine besonders gute Verbindung zwischen Setzmutter und Kupferstromschiene erreicht werden und mit dem Material der Setzmutter steht nun eine Verbindungsmöglichkeit zur Verfügung die eine hohe Kraft, bzw. ein hohes Drehmoment aufnehmen kann. Dadurch lassen sich entsprechend kurze Schraubverbindungen realisieren, mit denen die Stromschiene befestigt und/oder kontaktiert werden kann.

Bei einer weiteren vorteilhaften Ausgestaltung der Erfindung grenzt der zweite Bereich an den dritten Bereich, wobei die Kupferstromschiene im dritten Bereich einen Konus aufweist, wobei der Konus an der Grenze zum zweiten Bereich den zweiten Radiuswert aufweist. Dabei kann der Konus sich vollständig über den dritten Bereich erstrecken oder nur über einen Teil des dritten Bereichs. Falls der Konus sich nur über einen Teil des dritten Bereichs erstreckt kann vorteilhafterweise an der Grenze zur zweiten Oberfläche noch ein zylinderförmiger Abschnitt mit konstantem Radius mit einem dritten Radiuswert vorhanden sein. Dies ist insbesondere in dicken Kupferstromschienen sinnvoll. Mit dieser Anordnung können die Fertigungskräfte verringert und die Werkzeugstandzeiten erhöht werden.

Bei einer weiteren vorteilhaften Ausgestaltung der Erfindung grenzt der zweite Bereich an den dritten Bereich, wobei der Radius des Stufenlochs innerhalb des ersten, zweiten und dritten Bereichs jeweils konstant ist. Mit dieser Geometrie kann in wenigen Schritten unter Verwendung eines Stanzwerkzeugs dieses Stufenloch einfach in eine Kupferstromschiene eingebracht werden. Besonders vorteilhaft ist es beim Einbringen, wenn der erste und der zweite Bereich den gleichen Radiuswert aufweisen und der dritte Radiuswert im dritten Bereich geringer ist. Erst mit dem Einbringen der Setzmutter bildet sich im ersten Bereich ein erster Radiuswert aus, der größer als der zweite Radiuswert im zweiten Bereich. Insbesondere der konstante Radius im dritten Bereich verleiht der Kupferstromschiene an der zweiten Oberfläche in der Umgebung, an der der Kabelschuh befestigt wird, eine besonders hohe Stabilität.

Bei einer weiteren vorteilhaften Ausgestaltung der Erfindung weist die Kupferstromschiene eine Dicke im Bereich von 4 mm bis 6 mm auf, wobei der dritte Bereich eine Länge von mindestens 2 mm aufweist, wobei der dritte Radiuswert einen Wert im Bereich zwischen 2,15 mm und 2,4 mm aufweist. Diese Ausgestaltung eignet sich im Besonderen für den Einsatz in einem Stromrichter. Als Verschraubung kommt dabei eine M4-Verbindung zum Einsatz. In der damit herstellbaren Leistungsklasse mit einer Stufenloch-Geometrie für M4-Verbindungen ist diese Verbindung hier wesentlich kostengünstiger und zuverlässiger herstellbar im Vergleich zu bereits bekannten Verbindungsarten. Darüber hinaus können für die Herstellung der Verbindung analog auch andere Schrauben-Größen eingesetzt werden.

Bei einer weiteren vorteilhaften Ausgestaltung der Erfindung weist die Kupferstromschiene eine Vertiefung auf, wobei im Bereich der Vertiefung eine Dicke der Kupferstromschiene auf eine verringerte Dicke derart reduziert wird, dass sich die Setzmutter vollständig in dem Stufenloch und der Vertiefung befindet. Damit können hervorstehende Teile der Setzmutter und ggf. auch hervorstehende Teile der Schraube vermieden werden. Dies senkt das Verletzungsrisiko bei der Montage ohne hierfür einen höheren Aufwand bei der Montage zu erzeugen. Als besonders vorteilhat hat es sich erwiesen, wenn auch die Schraube in der Vertiefung verschwindet und diese nicht überragt. Damit können Verletzungen beim Hantieren mit der Kupferstromschiene auf einfache Weise verhindert werden.

Im Folgenden wird die Erfindung anhand der in den Figuren dargestellten Ausführungsbeispiele näher beschrieben und erläutert. Es zeigen:
- FIG 1: eine Kupferstromschiene mit einem Stufenloch,
- FIG 2: ein Kontaktsystem mit einem befestigten Kabelschuh und
- FIG 3: ein Kontaktsystem mit einer Vertiefung.

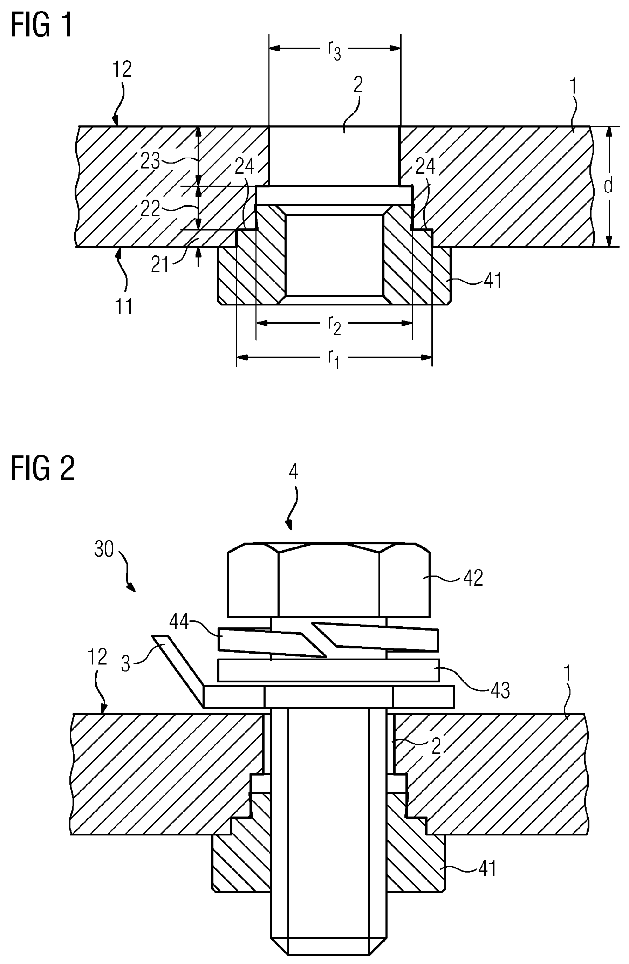

In FIG 1 ist ein Ausschnitt aus einer Kupferstromschiene 1 mit einem Stufenloch 2 gezeigt. Die Kupferstromschiene 1 kann dabei ein oder mehrere Stufenlöcher 2 aufweisen. Die Kontur des Stufenlochs 2 ist in der Figur mit einer dickeren Strichstärke dargestellt. Die Kupferstromschiene 1 umfasst eine erste Oberfläche 11 und eine zweite Oberfläche 12. Üblicherweise verlaufen die erste Oberfläche 11 und die zweite Oberfläche 12 parallel zueinander. Der Abstand der beiden Oberflächen 11,12 ist die Dicke d der Kupferstromschiene 1. Das Stufenloch 2 erstreckt sich durch das Innere der Kupferstromschiene 1 von der ersten Oberfläche 11 zur zweiten Oberfläche 12. Zur Herstellung einer Verbindung mit einem hier nicht dargestellten Kabelschuh 3 wird von der Seite der ersten Oberfläche 11 eine Setzmutter 41, auch als Einpressmutter bezeichnet, in das Stufenloch 2 eingeführt. Die Setzmutter 41 liegt mit ihrer Zahnung, die an ihrem Kragen eingearbeitet ist, auf einer Auflagefläche 24 auf. Die Auflagefläche 24 wird im Übergang vom ersten Bereich 21 zum zweiten Bereich 22 durch einen Sprung im Wert des Radius r von einem ersten Radiuswert r₁ zu einem zweiten Radiuswert r₂ erreicht. Im zweiten Bereich 22 ist es vorteilhaft, wenn der Radius über die gesamte Länge des zweiten Bereichs 22 einen konstanten Wert annimmt, um in diesem zweiten Bereich 22 die Setzmutter 41 beim Einsetzen zu führen und in der Kupferstromschiene 1 zu zentrieren. Im ersten Bereich 21 bildet sich der erste Radiuswert mit dem Einbringen der Setzmutter 41. Vor dem Einbringen kann der Radiuswert im ersten Bereich einen anderen Wert, beispielsweise den zweiten Radiuswert r₂, aufweisen. Eine vorteilhafte Wahl des dritten Radiuswertes r₃ wird anhand der FIG 2 näher beschrieben. In diesem Ausführungsbeispiel sind die Radien über die einzelnen Bereiche 21,22,23 jeweils konstant. Dies ist nicht zwingend erforderlich, erlaubt aber eine besonders günstige Fertigung durch Stanzen, da hier nur einfache Standardwerkzeuge auf der Stanzmaschine benötigt werden. Dabei ist es besonders vorteilhaft, beim Stanzen des Stufenlochs im ersten und zweiten Bereich 21,22 den gleichen Radiuswert vorzusehen und im dritten Bereich 23 einen dritten Radiuswert vorzusehen, der kleiner ist als der zweite Radiuswert r₂. Der größere Radius im ersten Bereich 21 mit dem ersten Radiuswert r₁ ergibt sich dann beim Einbringen der Setzmutter 41.

Um das Einbringen der Setzmutter 41 in der Montage zu vereinfachen kann auch bei der Herstellung des Stufenlochs im ersten Bereich bereits ein größerer Radius als der zweite Radiuswert r₂ vorgesehen werden.

Es ist darüber hinaus möglich, den dritten Bereich ganz oder zumindest abschnittsweise als Konus auszubilden. Der Konus bildet einen Übergang vom Radius mit dem zweiten Radiuswert r₂ an der Grenze zwischen dem zweiten Bereich 22 und dem dritten Radiuswert r₃. Der dritte Radiuswert wird dabei beispielsweise an der Oberfläche 12 erreicht oder im Innern der Kupferstromschiene so dass sich noch ein zylinderförmiger Abschnitt zwischen Konus und Oberfläche 12 anschließt.

Die FIG 2 zeigt die Kupferstromschiene 1 mit einer in das Stufenloch 2 eingebrachten Schraubverbindung 4. Kupferstromschiene 1 und Schraubverbindung 4 stellen zusammen mit dem Kabelschuh 3 ein Kontaktsystem 30 dar. Zur Vermeidung von Wiederholungen wird auf die Beschreibung zur FIG 1 und die dort eingeführten Bezugszeichen verwiesen. Die hier dargestellte Schraubverbindung 4 umfasst in diesem Ausführungsbeispiel die Setzmutter 41, eine Schraube 42, den Kabelschuh 3, eine Scheibe 43 und einen Federring 44. Mit dieser Schraubverbindung 4 wird der Kabelschuh an der zweiten Oberfläche 12 der Kupferstromschiene zuverlässig befestigt. Aber auch andere Systeme mit beispielsweise Klemmscheiben-Paaren oder mit einfacher Scheibe und mechanisch/chemischer Schraubensicherung im Setzmutter-Gewinde sind möglich. Selbst einfache Verschraubungen ohne Unterlegteile, oder mit einfacher Scheibe ohne zusätzliche Sicherung sind möglich. Insbesondere sind diese dann möglich, wenn die Anforderungen durch die Umweltbedingungen, beispielsweise durch Vibrationen, eine solche Verbindung zulassen.

Der dritte Radiuswert r₃ wird dabei in vorteilhafter Weise so gewählt, dass die Schraube 42 ohne Kraftaufwand, insbesondere ohne Berührung der Kupferwand, in das Stufenloch 2 von der zweiten Oberfläche 12 aus eingeführt werden kann. Je kleiner der Radiuswert r₃, desto geringer ist die Gefahr, dass sich der Kabelschuh 3 durch den Anpressdruck der Schraubverbindung 4 beim Anliegen an Teilen der zweiten Oberfläche 12 verbiegt oder deformiert. Somit wird der Radius im dritten Bereich möglichst klein gewählt, insbesondere klein im Verhältnis zum dritten Radiuswert r₃, so dass gerade die Schraube 42 noch durch den dritten Bereich 23 einsetzbar ist. Ein konstanter Radius über den gesamten dritten Bereich 23 hat den Vorteil, dass die Kupferstromschiene 1 im Bereich des Kabelschuhs 3 dann eine hohe Stabilität und Festigkeit aufweist. Somit wird ein Kontakt zum Kabelschuh 3 über die gesamte Fläche des Kabelschuhs, zumindest über einen Großteil der Fläche des Kabelschuhs 3, hergestellt, so dass damit neben der hohen Stabilität der Verbindung auch hohe Stromstärken möglich sind.

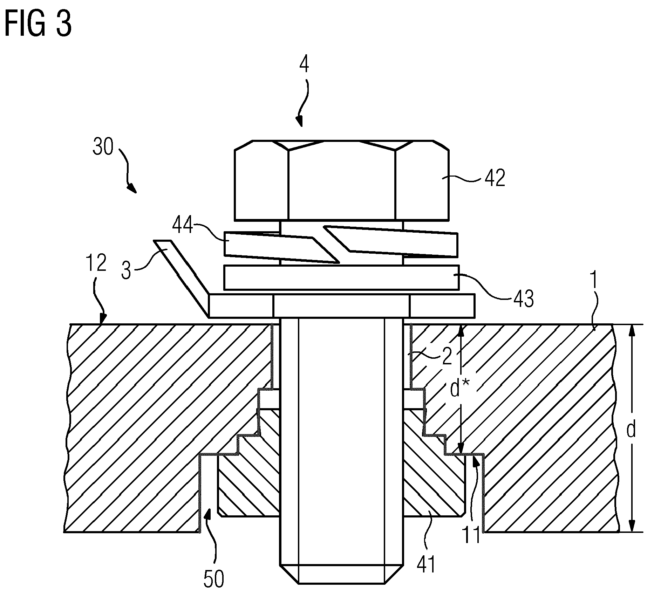

Die FIG 3 zeigt ein Ausführungsbeispiel eines Kontaktsystems 30, wobei die Kupferstromschiene 1 eine Vertiefung 50 aufweist. Diese Vertiefung 50 ist derart ausgeführt, dass die Setzmutter 41 nicht aus der ersten Oberfläche 11 herausragt, an der die Kupferstromschiene 1 eine Dicke d aufweist. An der Vertiefung 50 selbst ist die erste Oberfläche nach innen versetzt, so dass die Kupferstromschiene hier nur eine verringerte Dicke d* aufweist und die Setzmutter 41 sich vollständig in der Vertiefung 50 und dem Stufenloch 2 befindet. Besonders vorteilhaft ist es darüber hinaus, wenn auch die Schraube 42 nicht aus der Vertiefung hervorragt, da dadurch beispielsweise Verletzungen beim Hantieren/Warten der Kupferstromschiene 1 vermieden werden können. Zur Vermeidung von Wiederholungen wird auf die Beschreibung zu den Figuren 1 und 2 sowie auf die dort eingeführten Bezugszeichen verwiesen.

Zusammenfassend betrifft die Erfindung eine Kupferstromschiene. Zur Verbesserung der Verbindbarkeit mit einem Kabelschuh wird vorgeschlagen, dass die Kupferstromschiene mindestens ein Stufenloch zur Befestigung eines Kabelschuhs mittels einer Schraubverbindung aufweist, wobei sich das Stufenloch von einer ersten Oberfläche der Kupferstromschiene zu einer zweiten Oberfläche der Kupferstromschiene erstreckt, wobei das Stufenloch mindestens einen ersten Bereich, einen zweiten Bereich und einen dritten Bereich aufweist, wobei der erste Bereich des Stufenlochs an die erste Oberfläche grenzt, wobei der Radius des Stufenlochs über die Länge des zweiten Bereichs mit dem zweiten Radiuswert konstant ist, wobei der dritte Bereich an die zweite Oberfläche grenzt, wobei der dritte Bereich zumindest an der zweiten Oberfläche einen Radius mit einem dritten Radiuswert aufweist, wobei der dritte Radiuswert kleiner ist als der zweite Radiuswert. Weiter betrifft die Erfindung ein Kontaktsystem mit einer solchen Kupferstromschiene, sowie einen Stromrichter mit einer solchen Kupferstromschiene oder einem solchen Kontaktsystem. Ferner betrifft die Erfindung ein Herstellverfahren für eine solche Kupferstromschiene.

## Patentansprüche

1. Kupferstromschiene (1), wobei die Kupferstromschiene (1) mindestens ein Stufenloch (2) zur Befestigung eines Kabelschuhs (3) mittels einer Schraubverbindung (4) aufweist, wobei sich das Stufenloch (2) von einer ersten Oberfläche (11) der Kupferstromschiene (1) zu einer zweiten Oberfläche (12) der Kupferstromschiene (1) erstreckt, wobei das Stufenloch (2) mindestens einen ersten Bereich (21), einen zweiten Bereich (22) und einen dritten Bereich (23) aufweist, wobei der erste Bereich (21) des Stufenlochs (2) an die erste Oberfläche (11) grenzt, wobei der Radius des Stufenlochs (2) über die Länge des zweiten Bereichs (22) mit dem zweiten Radiuswert (r₂) konstant ist, wobei der dritte Bereich (23) an die zweite Oberfläche (12) grenzt, wobei der dritte Bereich (23) zumindest an der zweiten Oberfläche (12) einen Radius mit einem dritten Radiuswert (r₃) aufweist, wobei der dritte Radiuswert (r₃) kleiner ist als der zweite Radiuswert (r₂).

2. Kupferstromschiene (1) nach Anspruch 1, wobei in die erste Oberfläche (11) im Bereich des Stufenlochs (2) eine Setzmutter (41) derart mittig in das Stufenloch (2) eingepresst ist, dass der Radius im ersten Bereich einen ersten Radiuswert (r₁) annimmt und sich zwischen dem ersten Bereich (21) und dem zweiten Bereich (22) eine Stufe im Stufenloch (2) bildet, in dem sich der Radius an einer Grenze von dem ersten Bereich (21) zu dem zweiten Bereich (22) von einem ersten Radiuswert (r₁) zu einem zweiten Radiuswert (r₂) derart ändert, dass sich an der Grenze zwischen erstem Bereich (21) und zweitem Bereich (22) eine Auflagefläche (24) parallel zur ersten Oberfläche (11) bildet, und der zweite Radiuswert (r₂) kleiner ist als der erste Radiuswert (r₁), wobei mittels einer Schraube (42), die von der Seite der zweiten Oberfläche (12) in das Stufenloch (2) einsetzbar ist mittels der Setzmutter (41), der Kabelschuh (3) an der zweiten Oberfläche (12) befestigbar ist.

3. Kupferstromschiene (1) nach einem der Ansprüche 1 oder 2, wobei der zweite Bereich (22) an den dritten Bereich (23) grenzt, wobei die Kupferstromschiene (1) im dritten Bereich einen Konus aufweist, wobei der Konus an der Grenze zum zweiten Bereich den zweiten Radiuswert aufweist.

4. Kupferstromschiene (1) nach einem der Ansprüche 1 oder 2, wobei der zweite Bereich (22) an den dritten Bereich (23) grenzt und wobei der Radius des Stufenlochs innerhalb des ersten, zweiten und dritten Bereichs (21,22,23) jeweils konstant ist.

5. Kupferstromschiene (1) nach einem der Ansprüche 1 bis 4, wobei die Kupferstromschiene (1) eine Dicke im Bereich von 4 mm bis 6 mm aufweist, wobei der dritte Bereich (23) eine Länge von mindestens 2 mm aufweist, wobei der dritte Radiuswert (r₃) einen Wert im Bereich zwischen 2,15 mm und 2,4 mm aufweist.

6. Kontaktsystem (30) mit einer Kupferstromschiene (1) nach einem der Ansprüche 1 bis 5, einem Kabelschuh (3) und einer Schraubverbindung (4), wobei die Schraubverbindung (4) eine Setzmutter (41) und eine Schraube (42) umfasst, wobei mittels der Schraube (42), die von der Seite der zweiten Oberfläche (12) in das Stufenloch (2) eingeführt ist, und mittels der Setzmutter (41), die von der Seite der ersten Oberfläche (11) in das Stufenloch (2) eingepresst ist, der Kabelschuh (3) durch Verschrauben der Schraubverbindung (4) an der zweiten Oberfläche (12) befestigt ist.

7. Kontaktsystem (30) nach Anspruch 6, wobei die Kupferstromschiene (1) eine Vertiefung (50) aufweist, wobei im Bereich der Vertiefung (50) eine Dicke (d) der Kupferstromschiene auf eine verringerte Dicke (d*) derart reduziert wird, dass sich die Setzmutter (41) vollständig in dem Stufenloch (2) und der Vertiefung (50) befindet.

8. Stromrichter mit einer Kupferstromschiene (1) nach einem der Ansprüche 1 bis 5 oder einem Kontaktsystem (30) nach einem der Ansprüche 6 oder 7, wobei mittels der Kupferstromschiene (1) ein elektrischer Anschluss des Stromrichters und ein Halbleiterschalter des Stromrichters elektrisch miteinander verbunden sind.

9. Verfahren zur Herstellung einer Kupferstromschiene (1) nach einem der Ansprüche 1 bis 5, wobei das Stufenloch (2) der Kupferstromschiene (1) mittels einer Stanzmaschine in die Kupferstromschiene (1) eingebracht wird.
